(19) Europäisches Patentamt
European Patent Office
Office européen des brevets

(11) Veröffentlichungsnummer : **0 323 860 B1**

# (12) EUROPÄISCHE PATENTSCHRIFT

(45) Veröffentlichungstag der Patentschrift : **31.07.91 Patentblatt 91/31**

(51) Int. Cl.$^5$ : **H02P 6/02**

(21) Anmeldenummer : **89102725.2**

(22) Anmeldetag : **30.01.86**

## (54) Antriebs- und Positioniersystem.

(30) Priorität : **12.02.85 DE 3504681**

(43) Veröffentlichungstag der Anmeldung : **12.07.89 Patentblatt 89/28**

(45) Bekanntmachung des Hinweises auf die Patenterteilung : **31.07.91 Patentblatt 91/31**

(84) Benannte Vertragsstaaten : **AT BE CH DE FR GB IT LI NL SE**

(56) Entgegenhaltungen :
**EP-A- 0 105 033**
**FR-A- 2 443 761**
**US-A- 4 135 120**
**US-A- 4 455 514**

(60) Veröffentlichungsnummer der früheren Anmeldung nach Art. 76 EPü : **0 191 366**

(73) Patentinhaber : **Deutsche Forschungsanstalt für Luft- und Raumfahrt e.V.**
**Linder Höhe Postfach 90 60 58**
**W-5000 Köln 90 (DE)**

(72) Erfinder : **Ruppert, Udo, Dr.**
**Ladiusstrasse 2**
**W-1000 Berlin 37 (DE)**

(74) Vertreter : **Moser, Herbert, Dr.-Ing.**
**Nowackanlage 15**
**W-7500 Karlsruhe 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 323 860 B1

## Beschreibung

Die Erfindung betrifft ein Antriebs- und Positioniersystem bestehend aus einem mit Permanentmagneten bestückten Rotor und aus einem mindestens zwei Teilwicklungen aufweisenden Stator, wobei die Teilwicklungen mit einer von Rotorpositions-Sensoren zur Stromkommutierung gesteuerten elektronischen Spannungsversorgungsschaltung verbunden sind.

Ein Antriebsmotor der eingangs genannten Art ist in dem Prospekt der Firma Magnetic Technology von 1978 unter der Bezeichnung "Brushless DC Motors" dargestellt. Dabei handelt es sich um einen für verschiedene Anwendungsgebiete bestimmten Gleichstrom-Antriebsmotor, welcher einen permanentmagnetischen Rotor und einen geblechten Stator mit einer aus zwei Teilwicklungen bestehenden Statorwicklung aufweist. Durch entsprechend angeordnete Rotorpositions-Sensoren, die als Hall-Sensoren ausgebildet sein können, wird jeweils die aktuelle Rotorstellung festgestellt. Die elektronische Spannungsversorgungsschaltung kommutiert den von zwei Leistungsverstärkern gelieferten Speisestrom der beiden Teilspulen in Abhängigkeit von der festgestellten Rotorposition derart, daß eine fortgesetzte Drehbewegung entsteht.

Bei einem derartigen Antriebsmotor werden durch Hystereseeinflüsse im Eisenkreis des Stators und dessen relativ großer elektrischer Zeitkonstante die Einstellgenauigkeit der Drehbewegung und die Einhaltung einer vorgeschriebenen Sollwertposition verringert. Er weist ferner Sättigungs- und Wirbelstromerscheinungen im Weicheisen sowie bevorzugte mechanische Nullpositionen des Rotors auf. Dies führt zu Wechselstrom- bzw. Gleichstromverlusten.

Zum Stande der Technik gehört ferner ein bürstenloser Gleichstrommotor in eisenloser Ausführung des Stators, der in der Veröffentlichung A.R. Millner aus dem MIT Lincoln Laboratory, Lexington, Massachusetts vom Juni 1978 "A high-speed high-efficiency permanent magnetic motor-generator" beschrieben wurde. Der mit einer Mehrzahl von sektorförmigen Permanentmagneten bestückte Rotor induziert in seiner Drehbewegung in der feststehenden Statorwicklung Signalspannungen, die zur Kommutierung des Statorstroms in einer elektronischen Spannungsversorgungsschaltung verwendet werden. Auch im Falle dieses bürstenlosen Motors ist nur eine dynamische Kommutierung während der Drehbewegung, jedoch keine Einregelung einer gewünschten statischen Sollwertposition möglich.

In der DE-AS 2832387 ist ein kollektorloser Gleichstrommotor mit axialem Luftspalt angegeben, welcher auf einer Rotorplatte in axialer Richtung magnetisierte Permanentmagnete in Verbindung mit einer Rotorrückschlußplatte aufweist. Der Stator besteht dabei aus zwei scheibenförmig übereinanderliegenden sternförmigen Antriebsspulen, die auf einer feststehenden magnetisierbaren Rückschlußplatte angeordnet sind. Zwei Hallgeneratoren bilden den Drehstellungsdetektor. Wegen der feststehenden magnetisierbaren Rückschlußplatte ist kein eisenfreier Stator vorhanden ; vielmehr liegen magnetisierbare Werkstoffe im alternierenden Magnetfeld.

Die DD-PS 34431 beschreibt einen flachen langsam laufenden Antriebsmotor zum unmittelbaren Antrieb von Schwungmassen. Der Stator weist mehrere etwa trapezförmige Flachspulen auf. Rotorpositions-Sensoren sind dabei nicht vorhanden. Als Stromwender kann ein elektronischer Schalter verwendet werden, der in vorgegebener Frequenz die feststehenden Spulen nacheinander steuert. Alternativ wird die Stromkommutierung über einen Kollektor in Verbindung mit Schleifund Segmentringen bewirkt.

Zum Stande der Technik gehört ferner ein Antriebssystem nach der FR-A-2443761, welches einen mit Permanentmagneten bestückten Rotor und einen zwei Teilwicklungen aufweisenden Stator enthält, bei dem die Teilwicklungen mit einer von magnetischen Rotorpositionssensoren zur Stromkommutierung gesteuerten elektronischen Spannungsversorgungsschaltung verbunden sind. Die Teilwicklungen sind mit zugeordneten Leistungsverstärkern verbunden, deren Eingänge mit Multipliziergliedern in Verbindung stehen, die mit dem Ausgangssignal der beiden Rotorpositionssensoren und mit Ansteuersignalen gespeist werden. Es handelt sich dabei um eine elektronische Schaltung zur Kommutierung, die zusätzlich eine Drehzahlregelung ermöglicht. Für diese Drehzahlregelschaltung wird lediglich die Frequenz der Rotorpositionssignale, nicht jedoch deren Phasenlage, herangezogen. Eine Positionierung des Rotors, welche eine Regelung in der Stillstandsposition erfordert, wobei eine geregelte Drehrichtungsumkehr wesentlich ist, kann mit dieser Schaltung nicht erreicht werden.

In der EP-A-105033 ist ein Gleichstrommotorpositioniersystem beschrieben, bei dem die Positionsregelabweichung durch Sinus- bzw. Cosinusfunktionen der Ist- bzw. Sollwertdrehwinkel gebildet wird. Für die Gewinnung der Regelsignale ist ein spezieller inkrementaler optischer Decoder vorgesehen. Außerdem handelt es sich um eine Schaltung für die Ansteuerung von Gleichstrommotoren, bei denen bereits eine mechanische oder elektronische Kommutierung vorhanden ist, wobei der beschriebene Decoder mit dem Gleichstrommotor gekoppelt wird.

Die Erfindung geht von der Aufgabenstellung aus, ein in weitem Anwendungsbereich, insbesondere auch zum Tieftemperatureinsatz geeignetes einheitliches Antriebsund Positioniersystem zu schaffen, welches die

verlustarme Einregelung beliebiger extrem stabiler, unbegrenzter Sollwert-Drehwinkel (Drehzahl) und vorgegebener Sollwert-Positionen mit hoher Genauigkeit ermöglicht. Das Antriebssystem soll dabei die vorgegebene SollwertPosition mit hoher Genauigkeit einhalten, in dieser keine Energie verbrauchen und bereits bei geringen Abweichungen von der Sollwert-Position, die eine Ruheposition oder eine Position der Bewegung sein kann, das maximale Drehmoment abgeben. Das Antriebssystem soll ferner auch hohe Drehzahlen bei geringen Verlusten ermöglichen.

Das Kennzeichnende der Erfindung wird bei einem Positioniersystem der eingangs genannten Art darin gesehen, daß in die Spannungsversorgungsschaltung bei zwei Teilwicklungen die sinusförmigen Ausgangssignale von mindestens zwei Rotorpositionssensoren zugeordneten ersten Multipliziergliedern zugeführt und mit aus dem Soll-Drehwinkel des Rotors abgeleiteten sinusförmigen, entsprechend den Sensor-Ausgangssignalen versetzten Signalwerten multipliziert werden, und daß die Teilwicklungen mit zugeordneten Leistungsverstärkern verbunden sind, deren Eingänge mit zweiten Multipliziergliedern in Verbindung stehen, die mit den Ausgangssignalen von zwei Rotorpositionssensoren und mit weiteren Eingangssignalen gespeist werden, wobei die weiteren Eingangssignale durch Summierglieder aus den Ausgangssignalen der ersten Multiplizierglieder gebildet sind. Die Rotorpositionssensoren dienen dabei nicht nur zur elektronischen Kommutierung als Ersatz für eine mechanische Kommutierung, sondern durch Bestimmung der Phasenlage des Drehsignals wird auch eine Regelung in der Stillstandsposition ermöglicht.

Eine eisenfreie Statorausführung des Antriebssystems ergibt in Verbindung mit dieser elektronischen Spannungsversorgungs-und Steuerschaltung eine exakte Rotorpositionierung in beliebigen Sollwert-Drehwinkeln β. Auch nach Einnahme einer vorgeschriebenen Ruheposition ist eine exakte Einregelung dieser Sollwertposition mit hoher Haltekraft möglich. Der Rotor verhält sich während seiner Drehbewegung und in der geregelten Sollwertposition praktisch magnetisch eingerastet, wobei jeder Auslenkung aus der vorgeschriebenen Bewegungsoder Rastlage starke magnetische Kräfte entgegenwirken. Bei eisenfreiem Aufbau ist eine extrem genaue verlustarme Steuerung möglich, wobei die Leistungsaufnahme nur von der Sollwert-Abweichung abhängt.

"Rotorpositions Sensoren" sind dabei Sensoren, welche vom Magnetfeld abhängige Signale erzeugen. Bevorzugt ist die Verwendung von Rotorpositions-Sensoren, die sowohl die Größe asls auch das Vorzeichen des magnetischen Feldes bestimmen und elektrische sinusförmige Ausgangssignale abgeben. Der Begriff "sinusförmig" soll dabei auch Formabweichungen in der Art der üblichen Signalverzerrungen einschließen.

Ferner kann es zweckmäßig sein, in bekannter Weise als Rotorpositions-Sensoren Hall-Sensoren zu wählen. Dadurch ergeben sich günstige Eingangsgrößen für die elektrische Spannungsversorgungs-und Steuerschaltung.

Die Zahl der Rotorpositions-Sensoren soll vorteilhaft so gewählt werden, daß außer der für die Kommutierung nötigen Positionsermittlung auch eine zusätzliche Erkennung der Rotorstellung und somit eine für die Regelschaltung zusätzlich auswertbare Kennzeichnung des Rotorbewegungsvorganges möglich ist. Bei zwei Teilwicklungen lassen sich die erforderlichen Informationen mit einer Mindestanzahl von zwei Rotorpositions-Sensoren erlangen, d.h. die Zahl der Sensoren entspricht mindestens der Anzahl der Teilwicklungen. Bei Anordnungen mit mehr als zwei Teilwicklungen können jedoch die erforderlichen Signalwerte auch mit einer der Anzahl der Teilwicklungen entsprechenden Sensorzahl oder mit einer geringeren Anzahl von Sensoren ermittelt werden.

Bei einer bevorzugten Ausführungsform sind vier Rotorpositions-Sensoren in Verbindung mit einer aus zwei Teilwicklungen bestehenden Statorwicklung vorgesehen, und jeder Rotorpositions-Sensor ist gegenüber dem Nachfolgenden in Winkelrichtung um $\frac{\pi}{2n}$ versetzt angeordnet. "n" bezeichnet die Anzahl der von den Permanentmagneten erzeugten Polpaare, welche den Luftspalt bestimmen, in dem die Teilwicklungen des Stators liegen. In genauer Darstellung beträgt die Winkelversetzung $(1 + 4m) \cdot \frac{\pi}{2n}$, wobei m = 0,1,2,3... beliebige ganzzahlige Werte annehmen kann.

Die Ausbildung der am Luftspalt gegenüberliegenden Polpaare kann in verschiedener Weise, insbesondere durch gegenüberliegende scheibenförmige Permanentmagnete oder durch Polschuhe eines Eisenkreises erzeugt werden, welcher einen oder mehrere Permanentmagnete enthält.

In der praktisch erprobten Schaltung sind vier Hallsensoren als Rotationspositions-Sensoren verwendet, die jeweils um den Winkel $\frac{\pi}{2n}$ versetzt angeordnet sind. Eine konstante Drehung des Rotors ergibt beispielsweise einen sinusförmigen Verlauf des mit den Polpaaren rotierenden Feldes und feldproportionale sinusförmige Hall-Sensorsignale, wobei die Signale untereinander jeweils um den Winkel $\pi/4$ verschoben sind. Dadurch entstehen folgende Hall-Sensorsignale $U_{H1}$, $U_{H2}$, $U_{H3}$, $U_{H4}$ in Abhängigkeit vom relativen Drehwinkel $\alpha$ des Rotors :

$$U_{H_1} = C \cdot \sin\left(\frac{n\alpha}{2}\right)$$

$$U_{H_3} = C \cdot \sin\left(\frac{n\alpha}{2} + \pi/4\right)$$

$$U_{H_2} = C \cdot \sin\left(\frac{n\alpha}{2} + \pi/2\right)$$

$$U_{H_4} = C \cdot \sin\left(\frac{n\alpha}{2} + \frac{3}{4}\pi\right)$$

C bedeutet eine Zahlenwertkonstante.

Die Ausgangssignale der vier Hall-Sensoren $U_{H1}$, $U_{H2}$, $U_{H3}$, $U_{H4}$ werden je einem zugeordneten ersten Multiplizierglied zugeführt und dort mit verschiedenen Signalwerten a, b, c und d multipliziert, wobei a, b, c und d als Funktionen des Soll-Drehwinkels β folgende Größen aufweisen :

$$a = \cos\left(\frac{n\beta}{2}\right)$$

$$c = \cos\left(\frac{n\beta}{2} + \pi/4\right)$$

$$b = \cos\left(\frac{n\beta}{2} + \pi/2\right)$$

$$d = \cos\left(\frac{n\beta}{2} + \frac{3}{4}\pi\right)$$

Solange der aktuelle Drehwinkels α vom Soll-Drehwinkel β abweicht, liefert die Spannungsversorgungsschaltung daher, unter Berücksichtigung des Drehsinnes, über die den entsprechenden Teilwicklungen zugeordneten Leistungsverstärker Lastströme. Das von den angesteuerten Teilwicklungen erzeugte Magnetfeld versucht, die Regelabweichung zu verkleinern.

Anstelle der Hall-Sensoren können auch andere geeignete Elemente zur Positionserkennung angewendet werden. Statt einer Abtastung durch zweckmäßig in die Teilwicklungen integrierte Rotorpositions-Sensoren kann gegebenenfalls auch eine andere Anordnung vorteilhaft sein, bei der die Rotorpositions-Signale von einem zusätzlichen separaten Permanentmagnetsystem bzw. von anderen Gebersystemen erzeugt werden.

In Verbindung mit einem entsprechenden Antriebssystem ergibt die beschriebene elektronische Spannungsversorgungsschaltung eine einwandfreie Positionierung des mit der Antriebseinheit, z.B. eines mit dem Trägerkörper verbundenen, anzutreibenden Bauteils. Durch die magnetische Rastung in der Führungsbewegung des Rotors können auch bei niedrigen Drehzahlen und im Stillstand hohe Kräfte auf den anzutreibenden Bauteil übertragen werden, welche dessen Führung in der vorgeschriebenen Zeitfunktion des Soll-Drehwinkels erzwingen.

In der Zeichnung ist ein Ausführungsbeispiel des Gegenstandes der Erfindung schematisch dargestellt ; es zeigen :

- Fig. 1 eine abgewickelte Darstellung von Rotor und Statorwicklung mit den Hall-Sensorsignalen als Funktion des Drehwinkels α,
- Fig. 2 eine Darstellung des zeitlichen Verlaufs der Hall-Sensorsignale aus Fig. 1 bei konstanter Drehbewegung,
- Fig. 3 ein Blockschaltbild der Spannungsversorgungsschaltung,
- Fig. 4 eine Ausführung einer in Verbindung mit der Spannungsversorgungsschaltung nach Fig. 3 benutzbaren Antriebseinheit in Ausschnittdarstellung.

In Fig. 1 sind im oberen Teil unterhalb der Pole ⊗, ⊙des Rotors zwei gegeneinander versetzte Teilwicklungen I, II erkennbar. Die Teilwicklungen sind dabei vorteilhaft derart überlappend auszuführen, daß der freie Innenraum der Teilspulen der einen Teilwicklung nahezu vollständig von den Stegteilen der Teilspulen der anderen Teilwicklung ausgefüllt ist. Dadurch wird eine günstige Ausnutzung des freien Spuleninnenraums erzielt. Die in die Teilwicklungen integrierten Hall-Sensoren $H_1$, $H_3$, $H_2$, $H_4$ befinden sich relativ zu den Teilwicklungen bzw. deren Teilspulen in den angegebenen Positionen. Im unteren Teil der Fig. 1 ist der Verlauf der von den Rotorpolen erzeugten magnetischen Feldstärke, und zwar im statischen Falle, zur Zeit T = 0 dargestellt. Es ergeben sich Hall-Sensorsignale entsprechend dem sinusförmigen Kurvenverlauf der Feldstärke als Funktion des Drehwinkels α.

Fig. 2 zeigt die im dynamischen Fall, und zwar bei einer Drehbewegung des Rotors mit konstanter Drehzahl, jeweils als Zeitfunktion auftretenden sinusförmigen Hall-Sensorsignale.

Die weitere Verarbeitung der Hall-Sensorsignale zeigt das Blockschaltbild nach Fig. 3. Zur Konstantstromspeisung der vier Hall-Sensoren $H_1$, $H_2$, $H_3$, $H_4$ ist eine Konstantstromquelle $I_C$ vorgesehen.

Die vier Hall-Sensorsignale,

$$U_{H1}, U_{H2}, U_{H3}, U_{H4}$$

werden nach entsprechender Verstärkung durch nachgeschaltete Verstärker $V_1$, $V_2$, $V_3$ und $V_4$ ersten Multipliziergliedern $\Pi_1$, $\Pi_2$, $\Pi_3$, $\Pi_4$ zugeführt und mit verschiedenen Signalen a, b, c, d so multipliziert, daß an den Ausgängen der Multiplizierglieder die Signale

$$a \cdot U_{H1},\ b \cdot U_{H2},$$

$$c \cdot U_{H3} \text{ und } d \cdot U_{H4}$$

entstehen.

Die Signale a, b, c, d sind Funktionen des vorgebbaren Sollwinkels β und werden aus den Funktionen sin $\frac{n}{2}\beta$ und cos $\frac{n}{2}\beta$ so erzeugt, daß nachfolgende Beziehungen gelten :

$$a = \cos\left(\frac{n \cdot \beta}{2}\right)$$

$$c = \cos\left(\frac{n \cdot \beta}{2} + \pi/4\right)$$

$$b = \cos\left(\frac{n \cdot \beta}{2} + \pi/2\right)$$

$$d = \cos\left(\frac{n \cdot \beta}{2} + \frac{3}{4}\pi\right)$$

Anschließend werden die Ausgangssignale der ersten Multiplizierglieder über Summierglieder $\Sigma_1$, $\Sigma_2$, $\Sigma_3$ summiert, und die Gesamtsumme wird über einen Regelverstärker R den beiden zweiten Multipliziergliedern $\Pi_5$ und $\Pi_6$ zugeführt, an denen auch die Hall-Sensor-signale

$$U_{H1} \text{ und } U_{H2}$$

direkt anstehen. Aus dem Produkt von

$U_{H1}$

und dem R entsprechend verstärktem Gesamtsummensignal aus $\Sigma_3$ wird das Ansteuersignal für den ersten Leistungsverstärker $L_1$ gebildet, welcher mit der Teilwicklung I in Verbindung steht. In gleicher Weise erfolgt die Erzeugung des Ansteuersignals für den zweiten Leistungsverstärker $L_2$ zur Speisung der Teilwicklung II durch das zweite Multiplizierglied $\Pi_6$ als Produkt aus dem Hall-Sensorsignal $U_{H2}$ und dem über den Regelverstärker R verstärkten Summensignal $\Sigma_3$.

Für die Verstärker $V_1$, $V_2$, $V_3$ und $V_4$ sind rauscharme, stabile schnelle Proportionalverstärker auszuwählen. Mit Hilfe des Regelverstärkers R kann die Auswirkung des Summenausgangssignals $\Sigma_3$ in den jeweils in den zweiten Multipliziergliedern $\pi_5$ und $\pi_6$ zu bildenden Produkten festgelegt werden.

Der vorgegebene Sollwinkel $\beta$ der Rotordrehung wird an einem Sollwertgeber SW eingestellt. Hierbei kann der Sollwinkel $\beta$ als Zeitfunktion ausgebildet sein. Im einfachsten Fall können an einem Spannungsteiler einem bestimmten Sollwinkel entsprechende Spannungen abgegriffen werden.

Für eine Bewegung ist $\beta = f(t)$ bzw. bei einer konstanten Dauerdrehung wird $\beta(t) = 2\pi \cdot \gamma \cdot t$, wobei die Drehzahl $2\gamma/n$ ist und $\gamma$ die Oszillationsfrequenz der Signale a, b, c, d darstellt. Aus dem vorgegebenen Sollwinkel $\beta$ werden in einer Recheneinheit G $\sin \frac{n \cdot \beta}{2}$ und $\cos \frac{n \cdot \beta}{2}$ gebildet und einem Summierverstärker $\Sigma\beta$ sowie einem Differenzverstärker $\Delta\beta$ zugeleitet. Diese erzeugen die eine Eingangsgröße der ersten Multiplizierglieder $\pi_3$ und $\pi_4$. Die zweite Eingangsgröße wird jeweils durch die Hall-Sensorsignale $U_{H3}$ und $U_{H4}$ gebildet. Damit liegen an den einen Eingängen der ersten Multiplizierglieder $\pi_1$, $\pi_2$, $\pi_3$, $\pi_4$ die im vorangegangenen angegebenen Signale a, b, c, d. Die Ausgangssignale des Summierverstärkers $\Sigma\beta$ und des Differenzverstärkers $\Delta\beta$ sind $\cos(\frac{n \cdot \beta}{2} + \Pi/4)$ und $\cos(\frac{n \cdot \beta}{2} + \frac{3}{4}\pi)$, also c und d.

Bei dieser Spannungsversorgungsschaltung wird mit den vier Hall-Sensoren der momentane lokale Feldverlauf relativ zu einer Teilspule der Teilwicklungen abgetastet und mit dem theoretischen Sollkurvenverlauf, gewonnen aus dem Sollwinkel $\beta$, verglichen. Die Teilwicklungen I, II werden durch die Spannungsversorgungsschaltung so angesteuert, daß im Gleichgewichtszustand beide Kurvenzüge möglichst übereinstimmen. Auf diese Weise folgt der Drehwinkel $\alpha$ des Rotors dem jeweils vorgegebenen Sollwinkel $\beta$, der konstant oder eine vorgebbare Sollfunktion der Zeit sein kann. Da die Abtastung durch die Hall-Sensoren mit praktisch unendlicher Auflösung erfolgt, kann jeder beliebige Drehwinkel $\alpha$ des Rotors mit großer Auflösung eingestellt oder es können auch exakt geführte Bewegungen vorgenommen werden, da bei der geringsten Abweichung des Drehwinkels $\alpha$ vom momentanen Sollwinkel $\beta$ sofort das maximale Drehmoment zur Nachführung erzeugt wird.

Der Rotor befindet sich damit stets in einem elektrodynamisch eingerasteten Zustand, wobei die Lage der Raststellung elektronisch eingestellt und verschoben werden kann. Die Raststellung kann auch kontinuierlich mit konstanter Geschwindigkeit umlaufen, wodurch beliebig kleine Drehzahlen mit vollem Drehmoment erzeugt werden können. Diese durch den besonderen eisenfreien Aufbau der Teilspulen des Antriebssystems in Verbindung mit der speziellen Spannungsversorgungsschaltung hervorgerufene elektro-dynamische Einrastung übertrifft die mechanische Rastung an Genauigkeit, Reproduzierbarkeit und Lebensdauer. Da der Rotor keine bevorzugte mechanische Nullposition hat, wird elektrische Leistung im wesentlichen nur dann verbraucht, wenn auslenkende Kräfte aus der Sollposition einwirken.

Die absolute Rotorstellung ist zunächst $\frac{n}{2}$ – deutig.

Wird das vorgewählte maximale Drehmoment überschritten, rastet der Antrieb aus und kann in eine andere der möglichen am Umfang verteilten $\frac{n}{2}$ Raststellungen einfallen. Bei Anwendungen, bei denen dies unzulässig erscheint, läßt sich durch bekannte elektronische Zusatzmaßnahmen (Identifizierung, Abzählen der Rastzustände) oder durch Einbau eines Permanentmagnet-Systems mit $n = 2$ die absolute Eindeutigkeit erzielen. Außerdem kann das Antriebssystem wie jeder andere Antrieb durch externe Positionsrückmeldung in normaler Servofunktion betrieben und auch in eine ungeregelte Motorfunktion überführt werden. Die Kombination mit anderen analogen oder digitalen Encodern ist möglich.

Fig. 4 zeigt eine mögliche konstruktive Ausbildung des Antriebssystems. Dabei ist ein spulenkörperförmiger ferromagnetischer Trägerkörper 1 des Rotors vorgesehen, welcher zwei Ringscheibenteile 2, 3 trägt, auf deren Innenflächen Permanentmagnete zur Bildung der Polpaare 4, 5 angeordnet sind. In den von den Polpaaren 4, 5 und den Ringscheiben 2, 3 gebildeten Luftspalt greift eine eisenfreie, feststehende scheibenförmige Statorwicklung 6 mit I-Querschnitt ein. Diese enthält die mit Gießharz vergossenen Teilspulen der beiden Teilwicklungen I, II sowie die in ihrer Lage einstellbaren Hall-Sensorträger 7. Der anzutreibende Wellenteil wird unmittelbar in die Mittelausnehmung 8 des Trägerkörpers 1 eingesetzt und mit diesem drehfest verbunden. In

der gezeigten Ausführung dient ein Arretierstift 9 zur drehfesten Fixierung der beiden Ringscheibenteile 2, 3.
Das Antriebssystem nach Fig. 4 ist Gegenstand des europäischen Patentes EP-B-0191366.

**Patentansprüche**

1. Antriebs- und Positioniersystem bestehend aus einem mit Permanentmagneten bestückten Rotor und aus einem mindestens zwei Teilwicklungen aufweisenden Stator, wobei die Teilwicklungen mit einer von in Winkelrichtung versetzten Rotorpositions-Sensoren zur Stromkommutierung gesteuerten elektronischen Spannungsversorgungsschaltung verbunden sind, **dadurch gekennzeichnet**, daß in die elektrische Spannungsversorgungsschaltung bei zwei Teilwicklungen (I, II) die sinusförmigen Ausgangssignale

$$(U_{H_1}, U_{H_2}, U_{H_3}, U_{H_4})$$

von mindestens zwei Rotorpositions-Sensoren (7) zugeordneten ersten Multipliziergliedern ($\pi_1$, $\pi_2$, $\pi_3$, $\pi_4$) zugeführt und mit aus dem Soll-Drehwinkel des Rotors abgeleiteten sinusförmigen, entsprechend den Sensor-Ausgangssignalen versetzten Signalwerten multipliziert werden, und daß die Teilwicklungen (I, II) mit zugeordneten Leistungsverstärkern ($L_1$, $L_2$) verbunden sind, deren Eingänge mit zweiten Multipliziergliedern ($\pi_5$, $\pi_6$) in Verbindung stehen, die mit den Ausgangssignalen

$$(U_{H_1}, U_{H_2})$$

von zwei Rotorpositions-Sensoren (7) und mit weiteren Eingangssignalen gespeist werden, wobei die weiteren Eingangssignale durch Summierglieder ($\Sigma_1$, $\Sigma_2$, $\Sigma_3$) aus den Ausgangssignalen der ersten Multiplizierglieder ($\pi_1$, $\pi_2$, $\pi_3$, $\pi_4$) gebildet sind.

2. System nach Anspruch 1, **dadurch gekennzeichnet**, daß vier jeweils in Winkelrichtung um (1 + 4 m) · $\frac{\pi}{2n}$ versetzte ("n" bezeichnet die Anzahl der von den Permanentmagneten erzeugten Polpaare und "m" = 0, 1, 2, 3.... sowie beliebige ganzzahligo Werte) Rotorpositions-Sensoren (7) angebracht sind.

**Claims**

1. Driving and positioning system consisting of a rotor equipped with permanent magnets and of a stator having at least two part-windings, with the part-windings being connected to an electronic voltage-supply circuit controlled by rotor-position sensors offset in an angular direction for current commutation, **characterised in that** in the case of two part-windings (I, II) the sinusoidal output signals

$$(U_{H1}, U_{H2}, U_{H3}, U_{H4})$$

of first multiplier elements ($\pi_1$, $\pi_2$, $\pi_3$, $\pi_4$) associated with at least two rotor-position sensors (7) are supplied to the electric voltage-supply circuit and are multiplied by sinusoidal signal values offset in accordance with the sensor output signals and derived from the desired angle of rotation of the rotor, and that the part-windings (I, II) are connected to associated power amplifiers ($L_1$, $L_2$) whose inputs are connected to two multiplier elements ($\pi_5$, $\pi_6$), which are supplied with the output signals

$$(U_{H1}, U_{H2})$$

of two rotor-position sensors (7) and with further input signals, with the further input signals being formed by summing elements ($\Sigma_1$, $\Sigma_2$, $\Sigma_3$) from the output signals of the first multiplier elements ($\pi_1$, $\pi_2$, $\pi_3$, $\pi_4$).

2. System according to claim 1, **characterised in that** four rotor-position sensors (7) are fitted, each offset in an angular direction by (1 + 4 m) · $\frac{\pi}{2n}$ ("n" signifying the number of pole pairs produced by the permanent magnets and "m" = 0, 1, 2, 3... as well as any integral values).

## Revendications

1. Système d'entraînement et de positionnement, comprenant un rotor équipé d'aimants permanents et un stator avec au moins deux enroulements partiels, les enroulements partiels étant reliés à un montage d'alimentation en courant électronique commandé par des détecteurs de position de rotor décalés dans le sens d'enroulement et destinés à la commutation du courant, **caractérisé en ce** que, dans le montage d'alimentation en courant électrique et avec deux enroulements partiels (I, II), les signaux de sortie sinusoïdaux ($U_{H1}$, $U_{H2}$, $U_{H3}$, $U_{H4}$) d'au moins deux détecteurs de position de rotor (7) sont transmis à des premiers multiplicateurs ($\Pi_1$, $\Pi_2$, $\Pi_3$, $\Pi_4$) associés et multipliés par des signaux sinusoïdaux déduits de l'angle de rotation du rotor et décalés conformément aux signaux de sortie des détecteurs ; et que les enroulements partiels (I, II) sont reliés à des amplificateurs de puissance associés ($L_1$, $L_2$) dont les entrées sont reliées à des seconds multiplicateurs ($\Pi_5$, $\Pi_6$) qui reçoivent les signaux de sortie ($U_{H1}$, $U_{H2}$) de deux détecteurs de position de rotor (7) et d'autres signaux d'entrée supplémentaires, les signaux d'entrée supplémentaires étant formés par des additionneurs ($\Sigma_1$, $\Sigma_2$, $\Sigma_3$) à partir des signaux de sortie des premiers multiplicateurs ($\Pi_1$, $\Pi_2$, $\Pi_3$, $\Pi_4$).

2. Système selon la revendication 1, caractérisé en ce qu'il comprend quatre détecteurs de position de rotor (7) décalés respectivement de $(1 + 4\ m) \cdot \Pi/2n$ ("n" désignant le nombre des paires de pôles produites par les aimants permanents et "m" = 0, 1, 2, 3... ainsi que des valeurs entières quelconques).

Fig. 1

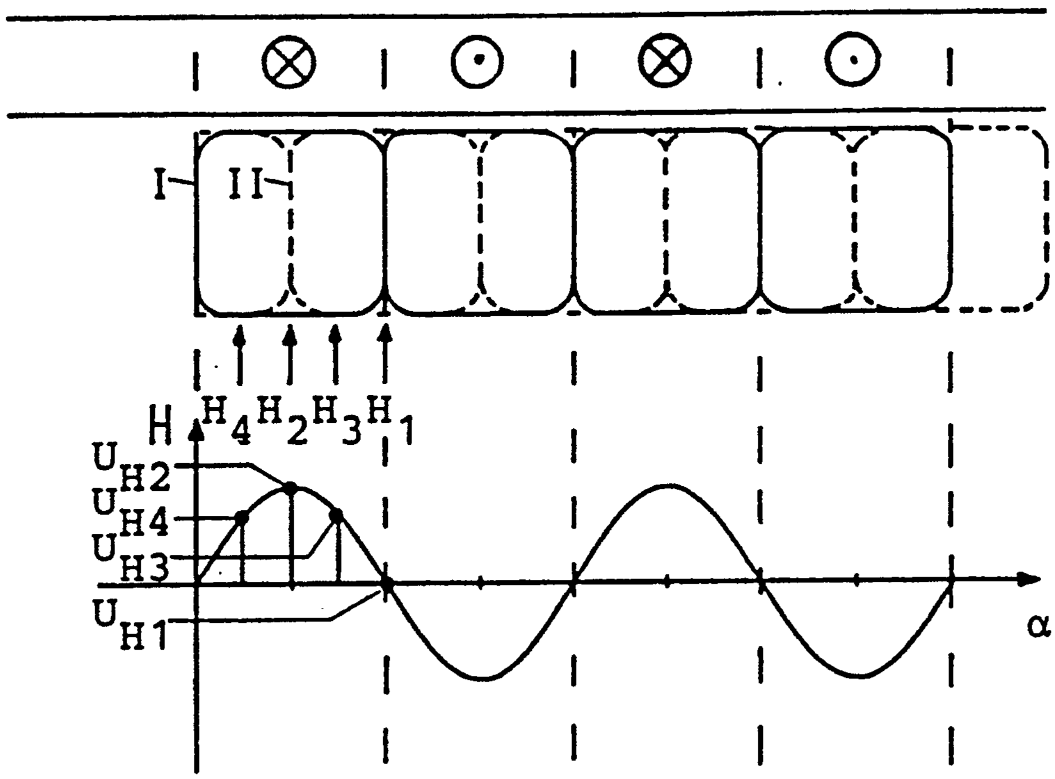


Fig. 2

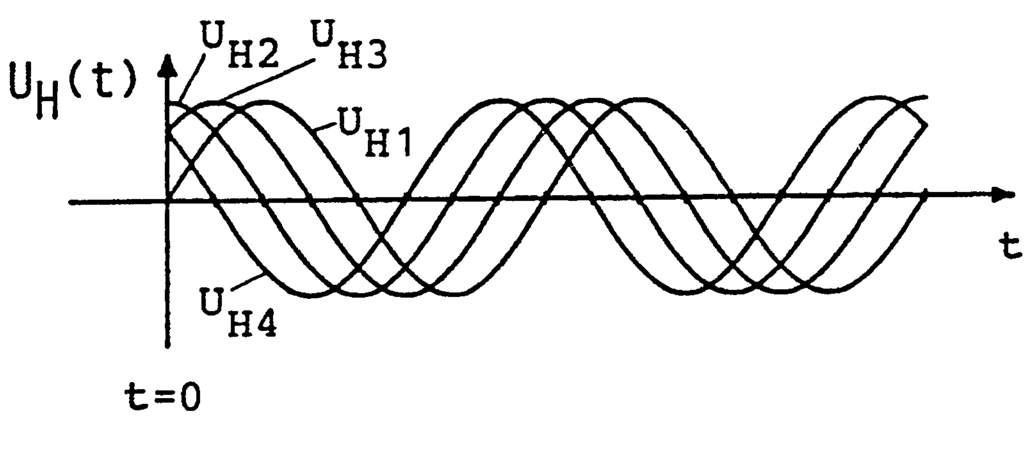

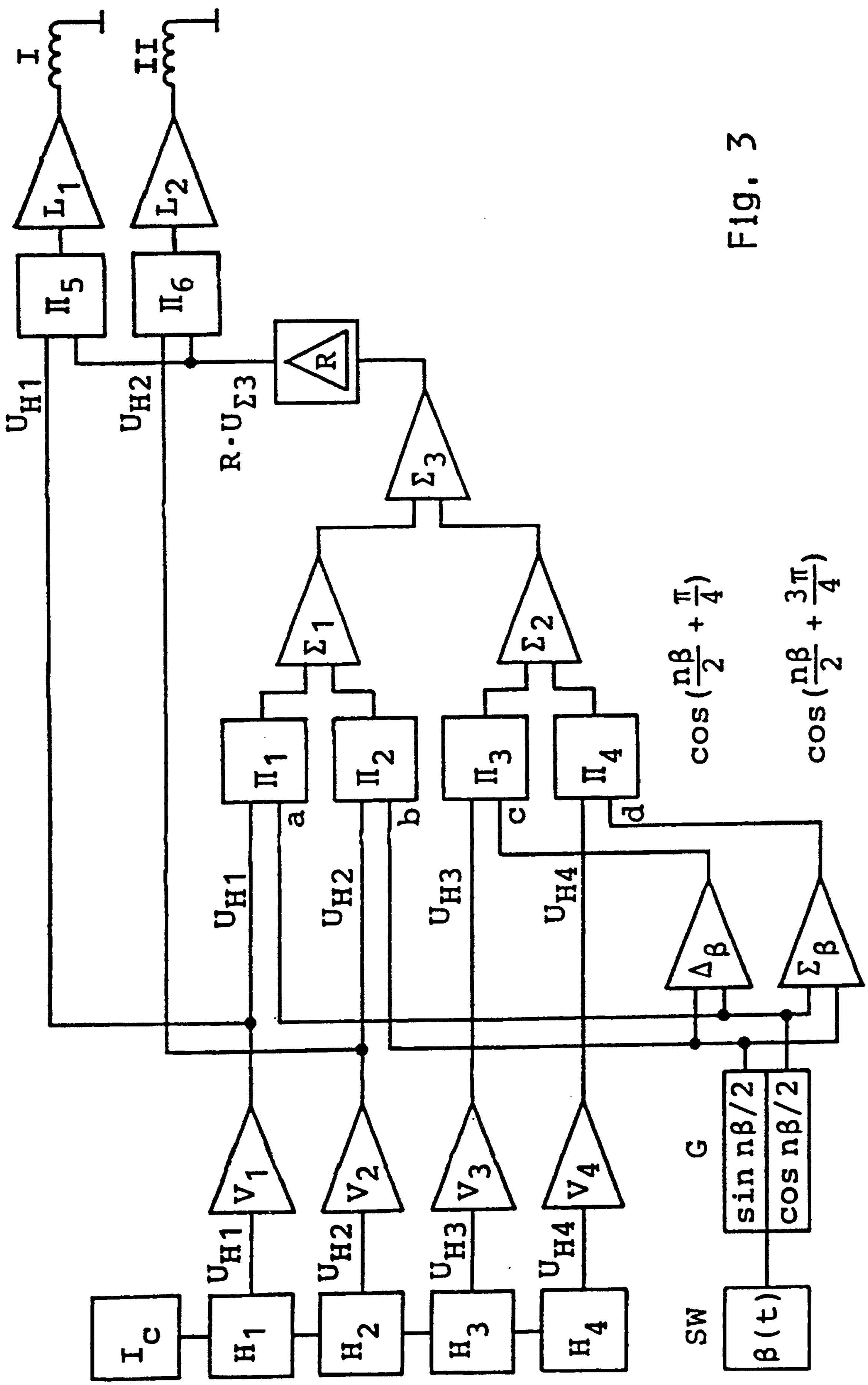
I
II
L1
L2
Π5
Π6
R
UH1
UH2
R·UΣ3
Σ3
Σ1
Σ2
Π1
Π2
Π3
Π4
a
b
c
d
cos(nβ/2 + π/4)
cos(nβ/2 + 3π/4)
Δβ
Σβ
UH3
UH4
V1
V2
V3
V4
G
sin nβ/2
cos nβ/2
Ic
H1
H2
H3
H4
SW
β(t)

Fig. 3

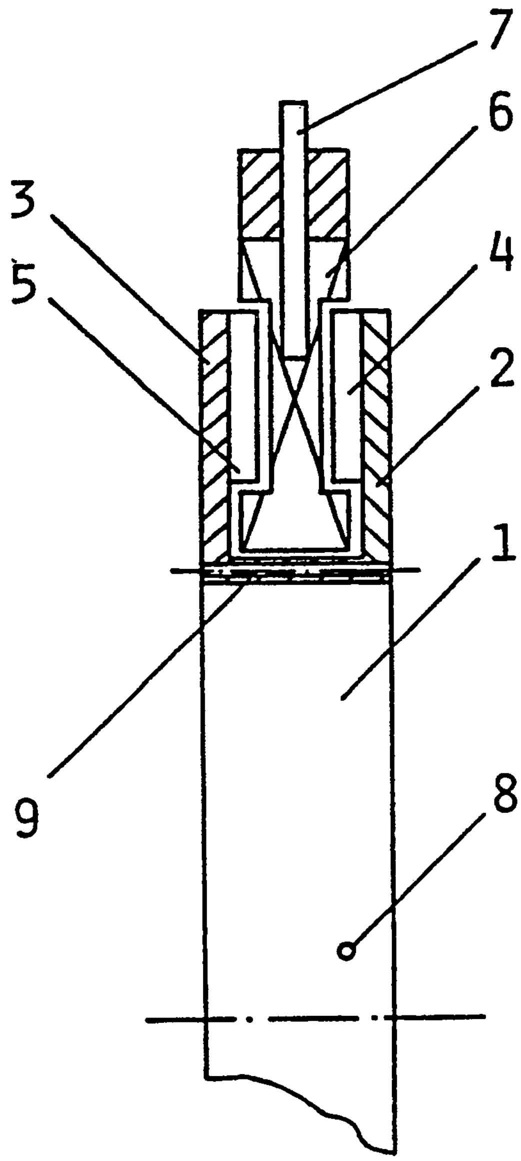


Fig. 4